(19) Europäisches Patentamt
European Patent Office
Office européen des brevets

(11) EP 1 537 391 B1

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **03756434.1**

(22) Anmeldetag: **06.09.2003**

(51) Int Cl.:
***G01J 9/00*** *(2006.01)* ***G01S 17/89*** *(2006.01)*
***G01J 1/00*** *(2006.01)*

(86) Internationale Anmeldenummer:
**PCT/DE2003/002966**

(87) Internationale Veröffentlichungsnummer:
**WO 2004/027359 (01.04.2004 Gazette 2004/14)**

(54) **VERFAHREN UND VORRICHTUNG ZUR ERMITTLUNG EINES PIXEL-GRAUWERTBILDES**

METHOD AND DEVICE FOR DETERMINING A PIXEL GRAY SCALE VALUE IMAGE

PROCEDE ET DISPOSITIF POUR DETECTER UNE IMAGE A DEMI-TEINTES DE PIXELS

(84) Benannte Vertragsstaaten:
**DE FR**

(30) Priorität: **13.09.2002 DE 10242693**

(43) Veröffentlichungstag der Anmeldung:
**08.06.2005 Patentblatt 2005/23**

(73) Patentinhaber: **Conti Temic microelectronic GmbH**
**90411 Nürnberg (DE)**

(72) Erfinder:
- **LANG, Christian**
  **83410 Laufen (DE)**
- **SCHNEIDER, Bernd**
  **64750 Lützelbach (DE)**
- **JORDAN, Holger**
  **85051 Ingolstadt (DE)**
- **DOBUSCH, Armin**
  **85049 Ingolstadt (DE)**

(56) Entgegenhaltungen:
**DE-A- 4 439 298 US-A1- 2002 084 430**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und eine Vorrichtung zur Ermittlung eines Pixel-Grauwertbildes, insbesondere für ein mehrdimensionales Bildsystem, z.B. für 3D-Kamerasysteme, die auf dem sogenannten Photomischdetektor-Prinzip (kurz PMD-Prinzip genannt) oder PMD-ähnlichen Prinzipien beruhen, welche je nach Art als Signalwellen beispielsweise Lichtwellen, Mikrowellen oder Schallwellen verwenden.

Das Funktionsprinzip eines herkömmlichen Photomischdetektors (auch Photonic Mixer Device genannt) ist vielfach bekannt und beispielsweise in der deutschen Offenlegungsschrift DE 198 21 974 A1 eingehend beschrieben. Weiter offenbart das Dokument US 2002/084430 A1 ein verfahren zur Messung von Intensität und Abstand für ein mehrdimentionales Bildsystem.

In einem möglichen Anwendungsfall wird beim Photomischdetektor ein differenzsignalauswertendes Verfahren beispielsweise für Entfernungsmessungen nach dem Phasenkorrelationsverfahren eingesetzt, wobei durch Störsigxlalanteile der in die Differenzbildung eingehenden Signale die Leistungsfähigkeit des Photomischdetektors begrenzt ist. Für die Berechnung des Entfernungswertes ist insbesondere die Differenz der Signalströme bzw. Signalspannungen in den beiden Hälften eines Pixelelements des Photomischdetektors (auch kurz PMD-Pixel genannt) von Bedeutung.

Deshalb ist man bestrebt, die Differenzbildung direkt auf dem Chip bzw. dem Halbleiter (= "On Chip") durchzuführen, um die Genauigkeit der Entfernungswerte zu verbessern. Beispielsweise können lange Leitungen Störeinflüssen verursachen. Um diese Störeinflüsse zu minimieren oder gar zu eliminieren, werden die einzelnen Signale auf dem Chip unmittelbar aufbereitet, z.B. mittels eines Verstärkers. Durch die geringen Abmessungen der Schaltungstechnik auf einem Chip werden Störungen symmetrisch auf die Detektoreinheiten verteilt und somit bei der Differenzbildung eliminiert. Um ein herkömmliches Grauwertbild zu erhalten müssen, beispielsweise beim Photogate PMD, aber die Signalleitungen für Ua und Ub zusätzlich zum Differenzsignal bereit gestellt werden.

Neben der Berechnung des Entfernungswertes kann anhand der Beleuchtung auch ein das Objekt darstellendes Pixel-Grauwertbild erfasst werden. Für die Bestimmung eines Pixel-Grauwertbildes ist es üblich, die Signale der Detektor- oder Ausleseeinheiten der Pixelhälften zu addieren. Dies führt dazu, dass eine der Anzahl der Signale entsprechende Anzahl von Signalleitungen bereitzustellen und separat zu verarbeiten ist. Demzufolge erhöht sich die Anzahl der Ausgänge des PMD-Chips und somit auch die Anzahl der analogen Signale, die zur weiteren Verarbeitung in digitale Signale gewandelt werden müssen. Darüber hinaus kommt es bei gleichzeitiger Darstellung des Entfernungs- und Pixel-Grauwertes zu einer Verringerung der Bildwiederholungsrate (auch Framerate genannt) aufgrund der erforderlichen größeren Anzahl von Wandlungen, insbesondere Signalwandlungen. Des weiteren ist die externe Beschaltung durch die Verwendung mehrerer Ausgänge besonders aufwändig.

Ein weiterer Nachteil bei der Pixel-Grauwertbildung durch Summation der Einzelsignale tritt auf, wenn eine die Gleichanteile oder Störsignale unterdrückende oder kompensierende Schaltung aktiv geschaltet ist. Bei Erhöhung des Nutzsignals steigt zunächst auch der Pixel-Grauwertanteil an und sinkt aber nach Erreichen einer vorgegebenen und eingestellten Schwelle für die Gleichlichtunterdrückung wieder ab, bis ein konstanter Wert erreicht wird, so dass der Pixel-Grauwert verfälscht wird. Der Pixel-Grauwert wird des Weiteren immer verfälscht, sobald er die vorgegebene und eingestellte Schwelle für die Gleichlichtunterdrückung überschritten hat.

Der Erfindung liegt daher die Aufgabe zugrunde, ein Verfahren zur Ermittlung eines Pixel-Grauwertbildes, insbesondere für ein mehrdimensionales Bildsystem anzugeben, welches eine besonders sichere, schnelle und genaue Erfassung des Pixel-Grauwerts für jeden einzelnen Pixel ermöglicht. Des Weiteren ist eine besonders einfache Vorrichtung zur Ermittlung eines Pixel-Grauwertbildes anzugeben.

Die Aufgabe bezüglich des Verfahrens wird erfindungsgemäß gelöst durch die Merkmale des unabhängigen Anspruchs 1. Die bezüglich der Vorrichtung gestellte Aufgabe wird erfindungsgemäß gelöst durch die Merkmale des unabhängigen Anspruchs 9.

Vorteilhafte Weiterbildungen der Erfindung sind Bestandteil der abhängigen Ansprüche.

Beim erfindungsgemäßen Verfahren wird für jeden Bildpixel ein sendeseitig ausgesandtes und an einem aufzunehmenden Objekt reflektiertes erstes Modulationssignal mit einem zweiten Modulationssignal, z.B. einem elektrischen Signal, korreliert und anhand von mindestens zwei jeweils zum empfangenen ersten Modulationssignal proportionalen Korrelationssignalen aufgenommen, wobei mindestens eines der Modulationssignale sende- oder empfangsseitig in mehreren Phasenschritten phasenverschoben wird, und für jeden Phasenschritt anhand der Korrelationssignale ein Differenzsignal und anhand dessen ein Pixel-Grauwert unabhängig von Störsignalen bestimmt werden. D.h. mehrere Detektor- oder Empfangseinheiten, z.B. Modulations-Gates oder Antennen, werden mit einem ersten - Modulationssignal, z.B. einem modulierten Lichtwellen- oder Mikrowellensignal, beaufschlagt, wobei sendeseitig oder empfangsseitig in mehreren Phasenschritten eine Phasenmodulation ausgeführt wird und empfangsseitig für den jeweiligen Phasenschritt anhand von an den Empfangseinheiten proportional zum ersten Modulationssignal erzeugten Ladungen, z.B. Photoladungen, ein repräsentierendes Differenzsignal bestimmt wird, anhand dessen der Pixel-Grauwert unabhängig, insbesondere frei von Störsignalen ermittelt wird. Mit anderen Worten: Mittels der gebildeten Differenzsignale in den einzelnen Phasenschritten wird ein vom Hintergrundlicht bzw. Störlicht und Störsignalen unabhängiger und freier Pixel-Grauwert oder Pixel-Entfernungswert bestimmt.

In einer bevorzugten Ausführungsform werden anhand der Differenzsignale sowohl ein Pixel-Grauwert als auch ein Pixel-Entfernungswert bestimmt. Insbesondere wird der Pixel-Grauwert und der Pixel-Entfernungswert gleichzeitig, d.h. parallel, anhand der Differenzsignale bestimmt. Hierdurch ist sichergestellt, dass zum einen der externe Schaltungsaufwand aufgrund der Verwendung eines einzigen Ausgangssignals - nämlich des Differenzsignals - minimiert ist. Zum anderen kann aufgrund der gleichzeitigen Aufnahme bzw. auch Ausgabe von Grau- und Entfernungsbild die Bildwiederholungsrate und die Anzahl der Signalabtastungen reduziert werden, wodurch eine Weiterverarbeitung, insbesondere eine Bildverarbeitung beschleunigt wird.

Gemäß der Erfindung wird der Pixel-Grauwert anhand der komplexen Funktion des Differenzsignals ermittelt gemäß

$$|z| = P_{Grau} = \sqrt{(\Delta \mathrm{Re})^2 + (\Delta \mathrm{Im})^2} \qquad (1)$$

mit $P_{Grau}$=Pixel-Grauwert, $\Delta$Re = Realteil des Differenzsignals, insbesondere eines Spannungs-Differenzsignals, $\Delta$Im= Imaginärteil des Differenzsignals, insbesondere eines Spannungs-Differenzsignals;

Mit anderen Worten: Es wird der Betrag des komplexen Signalwertes aus Imaginär- und Realteil gebildet, welcher einen vom Hintergrundlicht und Störsignalen unabhängigen und freien Pixel-Grauwert darstellt. Der Pixel-Grauwert $P_{Grau}$ ist die Größe des empfangenden Nutzsignals.

Zur Aufnahme von wellenlängenabhängigen Pixelgauwert- oder Intensitätsbildern wird das Modulationssignal in verschiedenen Wellenlängen, beispielsweise im Infrarot-Bereich mit 900 nm, Ultraviolett-Bereich oder im sichtbaren Bereich mit 675 nm erzeugt. Hierdurch wird ein Pixelgrauwertbild ermittelt, dass von der Wellenlänge der Beleuchtungseinheit abhängig ist. Mit anderen Worten: Da die beleuchtete Szene mit einem modulierten Sender einer bestimmten Wellenlänge aufgenommen worden ist, ist das Grauwertbild wellenlängenselektiv.

Zur Bestimmung des Pixelentfernungswertes und des Pixel-Grauwertes, anhand des sogenannten Phasenkorrelationsverfahren, wird eines der Modulationssignale zweckmäßigerweise empfangs- oder sendeseitig im jeweiligen Phasenschritt um 45° oder 90° phasenverschoben. Insbesondere ist je nach Vorgabe - Erhöhung der Genauigkeit oder der Schnelligkeit oder beides - eine beliebige äquidistante Verteilung der Phasenschritte über eine Periode von $2\pi$ besonders vorteilhaft.

Zur weiteren Verbesserung der Darstellung des Pixel-Grauwertbildes, z.B. im Falle eines schlechten Bildkontrastes, kann der Pixel-Grauwert zusätzlich logarithmiert werden. Alternativ oder zusätzlich dazu kann der Pixel-Grauwert anhand eines Korrekturfaktors, z.B. um den Faktor zwei angehoben werden.

Der herkömmliche Pixel-Grauwert kann auch in Abhängigkeit von einem einzelnen der Korrelationssignale bestimmt werden. Dabei wird analog zu dem erfindungsgemäßen Pixel-Grauwert eines der Modulationssignale in mehreren Phasenschritten, insbesondere in vier oder acht Phasenschritten phasenverschoben. Nachfolgend wird zur Erhöhung der Genauigkeit bevorzugt der Mittelwert gebildet.

Bezüglich der Vorrichtung wird die Aufgabe erfingdungsgemäß mit der im Anspruch 9 definierten Vorrichtung gelöst.

Als Empfangseinheit dienen bevorzugt je nach Verfahrensart Modulations-Gates oder Antennen. Als Sender dient eine optische Quelle oder $\mu$-Wellenquelle.

Im Fall eines optischen Bildsystems dient die optische Lichtquelle zur Beaufschlagung der Modulations-Gates mit einem optischen Modulationssignals. Dabei wird zur Korrelation des ersten Modulationssignals mit dem zweiten Modulationssignal eines der Modulationssignale, z.B. das elektrische oder das optische Signal, mittels eines Signalgenerators und eines Phasenschiebers sendeseitig oder empfangsseitig in mehreren Phasenschritten phasenverschoben. Den Modulations-Gates ist dabei zur Erfassung von die Modulations-Gates repräsentierenden Photoladungen jeweils eine Ausleseeinheit, z.B. eine Auslesediode zugeordnet, die mit der Auswerteeinheit verbunden ist zur Bestimmung eines aus den Photoladungen gebildeten Differenzsignals und zur Bestimmung eines vom Störlichtanteil und Störsignal unabhängigen Pixel-Grauwerts anhand des ermittelten Differenzsignals.

Der wesentliche Vorteil der Erfindung besteht vor allem darin, dass durch die Erfindung der externe Schaltungsaufwand minimiert werden kann, da für die Auswertung von Entfernungsbild und dem vom Störlicht und Störsignal unabhängigen Pixel-Grauwertbild nur das Differenzsignal notwendig ist. Des Weiteren reduziert sich die Anzahl der Signalabtastungen für die Pixel-Grauwertermittlung. D.h. die Framerate einer PMD-Kamera kann bei gleichzeitiger Darstellung des Entfernungsbildes und des vom Hintergrundlicht unabhängigen Pixel-Grauwertbildes annähernd konstant gehalten werden. Bei gleichzeitiger Darstellung des Pixel-Grauwertbildes durch Summation der Signale der Pixelhälften und des Entfernungsbildes reduziert sich die Framerate. Beim erfindungsgemäßen Verfahren ist darüber hinaus sichergestellt, dass die Bestimmung von Pixel-Grauwerten durch eine Fremdlicht-Unterdrückungsschaltung nicht verfälscht werden. Durch die Ermittlung der Pixel-Grauwerte und des Pixel-Grauwertbildes unabhängig vom Störlicht wird bei aktiver Störlicht-Unterdrückungsschaltung die Signaldynamik einer PMD-Kamera bei Nutzlichtvariation erhöht. Insbesondere eignet sich das Verfahren auch zur Aufnahme von wellenlängenselektiven Pixel-Grauwertbildern und zur Berechnung eines vom Störlicht unabhängigen und freien Pixel-Grauwertes für den Aufbau von Reemissions-Messgeräten. Hierdurch ist ein Aufbau von Reemissions-Messgeräten auf Basis der PMD-Technologie möglich. Ferner kann das Verfahren auf PMD-ähnlichen Prinzipien oder bei auf Pseudo-Rausch-Modulation beruhenden PMD-Kameras verwendet werden.

Vorteilhafte Ausgestaltungen und Weiterbildungen des Erfindungsgedankens sind der weiteren Beschreibung unter Bezugnahme auf die Zeichnung entnehmbar.

Die Erfindung wird nachfolgend anhand der in den Figuren der Zeichnung dargestellten Ausführungsbeispiele näher erläutert. Es zeigt dabei:

Figur 1 ein allgemeines Blockschaltbild für eine Vorrichtung zur Ermittlung eines Pixel-Grauwertbildes nach dem quasi-heterodyne-Verfahren;

Figur 2 das Prinzipschaltbild eines Pixelelements für einen Photomischdetektor mit Gleichlicht-Unterdrückungsschaltung;

Figur 3 in einer schematischen Darstellung das Verhalten des Pixel-Grauwertes durch Summation bei Erhöhung des Hintergrundlichtes nach dem Stand der Technik;

Figur 4 in einer schematischen Darstellung das Verhalten des Pixel-Grauwertes durch Summation bei Erhöhung des Nutzsignals nach dem Stand der Technik;

Figur 5 anhand schematischer Darstellungen das Funkti- onsprinzip eines Photomischdetektors (= Photonic Mi- xer Device oder kurz PMD);

Figur 6 das Verhalten eines vom Hintergrundlicht unabhängi- gen Pixel-Grauwertes bei Erhöhung des Gleichlichtes;

Figur 7 das Verhalten eines vom Hintergrundlicht unabhängi- gen Pixel-Grauwertes bei Erhöhung des Nutzsignals.

Gleiche beziehungsweise funktionsgleiche Elemente sind in allen Figuren - sofern nichts anderes angegeben ist - mit gleichen Bezugszeichen versehen worden.

Figur 1 zeigt ein allgemeines Blockschaltbild für eine Vorrichtung 1 zur Ermittlung eines Pixel-Grauwertbildes nach dem Quasi-Heterodyn-Verfahren.

Die Vorrichtung 1 umfasst als Sender 2 beispielsweise für ein optisches Bildsystem eine Lichtquelle zur Erzeugung einer aktiven Beleuchtung wie z.B. Licht L, insbesondere Infrarotlicht, Ultraviolettes Licht oder Licht im sichtbaren Bereich. Dabei wird das von der Lichtquelle oder dem Sender 2 ausgehende Licht L in einem Mischer in Abhängigkeit von einem vorgegebenen ersten Modulationssignal M1 in der Amplitude variiert. Hierzu ist der Sender 2 mit einem Signalgenerator 4 verbunden. Das erste Modulationssignal M1 (= ein optisches Signal, im weiteren kurz Modulationssignal M1 genannt) wird vom Sender 2 ausgestrahlt und auf einem Übertragungsweg 6 (= Messstrecke) von einem nicht näher dargestellten aufzunehmenden Objekt oder eine Szene reflektiert. Dabei kommt es auf dem Übertragungsweg 6 zu einer Verzögerung 8 und einer Dämpfung 10 des ersten Modulationssignals M1, welches empfangsseitig von einer Empfangseinheit 12 mit dem vom Signalgenerator 4 als zweites Modulationssignal M2 erzeugten elektrischen Signal S korreliert wird. Als Empfangseinheit 12 dient ein Photomischdetektor (im weiteren Photomischdetektor 12 genannt).

Beispielhaft ist in Figur 1 schematisch ein Pixelelement 14 (auch PMD-Pixel genannt) des Photomischdetektors 12 dargestellt. Zur Aufnahme eines Bildes des Objekt oder der Szene sind in nicht näher dargestellter Art und Weise mehrere Pixelelemente 14 in Reihe oder in Spalte oder in einer Matrix zu einem Photomischdetektor 12 angeordnet und bilden beispielsweise ein mehrdimensionales optisches System wie eine 3D-Kamera.

Im jeweiligen Pixelelement 14 werden proportional zum empfangenen optischen Modulationssignal M1 so genannte photogenerierte Ladungsträger, kurz Photoladungen genannt, erzeugt. Anhand mehrerer empfangener optischer Modulationssignale M1 und der daraus generierten Photoladungen kann mittels des sogenannten Phasen-Korrelationsverfahrens die Entfernung eines mit dem optische Modulationssignal M1 beaufschlagten Objekts innerhalb eines Phasenbereiches von $2\pi$ eines entfernungsproportionalen Phasenversatzes $\varphi$ zwischen empfangenen und ausgesendeten Modulationssignals M1 bestimmt werden. Dazu wird das elektrische Signal S sowohl sendeseitig als Signal Sa als auch empfangsseitig als Signal Sb zur Mischung mit dem Licht L bzw. dem Modulationssignal M1 der Lichtquelle oder des Senders 2 bzw. dem Photomischdetektor 12 zugeführt. Zur Bestimmung des entfernungsproportionalen Phasenversatzes $\varphi$ sind mindestens zwei Korrelationsmessungen erforderlich. Mittels einer dem Pixelelement 14 nachgeschalteten Auswerteeinheit 16 wird dann anhand der Photoladungen ein Differenzsignal D gebildet.

Darüber hinaus kann beim Betrieb der Vorrichtung 1 die beleuchtete Szene oder das beleuchtete Objekt mittels des modulierten Senders 2 - der modulierten Lichtquelle - mit einer bestimmten Wellenlänge aufgenommen werden. Dies ermöglicht die wellenlängenselektive Ermittlung von Pixel-Grauwertbildern. Beispielsweise wird dazu das Objekt oder die Szene mit im Infrarot-Bereich, sichtbaren Bereich oder ultraviolettem Bereich liegenden verschiedenen Wellenlängen, z.B. mit 900nm, 675nm oder 350nm, beleuchtet.

Wird eine Szene von dem als Lichtquelle ausgebildeten Sender 2 zur aktiven Beleuchtung mit einer konstanten Lichtleistung bestrahlt, so kann die Reemission der Szene aus dem vom Hintergrundlicht unabhängigen Pixel-Grauwert $P_{Grau}$ und dem Entfernungswert $P_E$ ermittelt werden. Somit ermöglicht das beschriebene Verfahren die Aufnahme von 2D-Reemissionsbildern.

Je nach Art und Ausführung der Vorrichtung 1 können weitere Korrelationsmessungen ausgeführt werden, die mittels einer oder mehrerer zusätzlicher Phasenverzögerungsschritte $\psi_k$ (im weiteren kurz Phasenschritte $\psi_k$ genannt) erzeugt werden. Dazu umfasst die Vorrichtung 1 einen Phasenschieber 18, der je nach Anordnung eine sendeseitige und/oder eine empfängerseitige Phasenverschiebung, ermöglicht. Beispielhaft ist in Figur 1 eine empfängerseitige Phasenverschiebung vorgesehen, bei der der Phasenschieber 18 zwischen dem Signalgenerator 4 und dem Photomischdetektor 12 angeordnet ist. Bevorzugt wird das empfangene optische Modulationssignal M1 im jeweiligen Phasenschritt $\psi_k$ um 45° oder 90° oder um einen innerhalb des Phasenbereiches von $2\pi$ liegenden Phasenschritt $\psi_k$ verschoben.

In Figur 2 ist im Detail ein Pixelelement 14 des Photomischdetektors 12 dargestellt. Dabei umfasst ein Pixelelement 14 als Empfangseinheit 12 beispielsweise zwei Modulations-Gates 20a und 20b zum Empfang des optischen Modulationssignals M1 und zur Generierung der proportionalen Photoladungen. Bei einer alternativen nicht näher dargestellten Anwendung der Vorrichtung 1 kann die Empfangseinheit 12 als Antenne ausgebildet sein, der Sender 2 ist in diesem Anwendungsfall als HF-Sender ausgeführt.

Zur Erfassung der Photoladungen sind den Modulations-Gates 20a und 20b Ausleseeinheiten 22a und 22b zugeordnet. Die - Ausleseeinheiten 22a und 22b dienen dabei der Ausgabe von Stromsignalen Ia und Ib (auch Photoströme genannt).

Zur weiteren Verarbeitung, insbesondere zur Differenzbildung der Spannungssignale Ua und Ub bzw. der Stromsignale Ia und Ib sind an den Ausleseeinheiten 22a und 22b entsprechende Ausgangsleitung 26 vorgesehen, die mit der Auswerteeinheit 16 verbunden ist. Anhand der Differenzbildung der Stromsignale Ia und Ib bzw. der Spannungssignale Ua und Ub wird eine zugrunde liegende Größe, z.B. ein Pixel-Entfernungswert $P_E$ oder ein Pixel-Grauwert $P_{Grau}$, bestimmt. Je nach Art und Ausbildung können je Pixelelement auch mehr als zwei Modulations-Gates 20a und 20b und Ausleseeinheiten 22a und 22b vorgesehen sein.

Mit anderen Worten: Mittels des anhand der erfassten Stromsignale Ia und Ib bzw. Spannungssignale Ua und Ub gebildeten Differenzsignals D, insbesondere Strom-Differenzsignals bzw. Spannungs-Differenzsignals $\Delta U$, wird der Pixel-Grauwert $P_{Grau}$ unabhängig bzw. frei vom Störsignalen SL, insbesondere von Störlicht bestimmt. Dabei wird mittels der Differenzbildung der an den Ausleseeinheiten 22a und 22b erfassten Signale und dem darauf folgenden Auswerteverfahren eine Kompensation der Störsignale SL und die Unabhängigkeit des Pixel-Grauwertes $P_{Grau}$ vom Störlicht sowie die Ermittlung der Größe des Nutzsignals bewirkt.

Alternativ oder zusätzlich dazu kann je nach Art und Ausführung der Vorrichtung 1 je Pixelelement 14 eine Störlicht-Unterdrückungsschaltung 28 vorgesehen sein. In Figur 2 ist nur ein Beispiel für eine Unterdrückungsschaltung 28 dargestellt; es ist auch eine beliebig andere Form mit ähnlicher Wirkung einsetzbar. Überschreitet nun beispielsweise eine der beiden Spannungswerte oder Spannungssignale Ua, Ub, welche sich zeitlich aufgrund eines größeren Stromsignales Ia bzw. Ib stärker ändert, einen voreingestellten Schwellenwert G, so verharrt dieses Spannungssignal Ua bzw. Ub, über einen längeren Zeitraum betrachtet, auf einem nahezu konstanten Wert. Der jeweils zweite Spannungswert Ua bzw. Ub wird hingegen nach einer Aufintegrationsphase wieder abintegriert. Die Spannungs-Differenzwerte $\Delta U$ bleiben dadurch jedoch unbeeinflusst. Hierzu werden die beiden Spannungssignale Ua und Ub mittels eines Maximalwertdetektors 30 der Störlicht-Unterdrückungsschaltung 28 verarbeitet, so dass am Ausgang ein zum größeren der beiden Spannungssignale Ua bzw. Ub proportionales Ausgangssignal A zur Steuerung von zwei identischen Stromquellen 32 anliegt.

Im Folgenden soll das Verfahren zur Bestimmung des vom Störlicht oder Hintergrundlicht unabhängigen Pixel-Grauwerts $P_{Grau}$ beispielhaft anhand einer 8-Phasenansteuerungen des Photomischdetektors 12 beschrieben werden. Das Verfahren ist dabei nicht auf eine 8-Phasenansteuerung beschränkt, sondern kann allgemein für eine beliebige Anzahl N von Phasenalgorithmen oder Phasenschritten $\psi_k$ angewendet werden.

Die Phasenverschiebung oder der Phasenversatz $\varphi_d$, der die Entfernung der Lichtquelle 2 zum Messobjekt wiederspiegelt, wird in der bevorzugten Ausführungsform komplex hergeleitet. Anschließend wird aus dem Imaginär- und Realteil der vom Hintergrundlicht unabhängige bzw. freie Pixel-Grauwert $P_{Grau}$ bestimmt.

Die Bestimmung des Pixel-Entfernungswertes $P_E$ erfolgt anhand eines Phasenalgorithmus mit den Phasenschritten $\psi_k$ gemäß:

$$\Psi_k = \frac{2\pi}{N} \cdot k \qquad (2)$$

mit k = [0, 1,...,N-1], wobei N die Anzahl der Phasenschritte $\psi_k$ ist. Im Beispiel beträgt die Anzahl N gleich 8 (= 8 Phasenmessungen). Als Ausgangssignal liefert das jeweilige Pixelelement 14 für jede Phasenmessung k zwei Spannungssignale Ua,k und Ub,k, die der Auswerteeinheit 16 zugeführt werden. Mittels der Auswerteeinheit 16 wird das Gesamtausgangssignal oder Differenzsignal D, beispielsweise das Spannungs-Differenzsignal ΔU dieser Spannungssignale Ua,k und Ub,k in Vektorform wie folgt gebildet.

```
Ua = [Ua,0, Ua,1, Ua,2, Ua,3, Ua,4, Ua,5, Ua,6, Ua,7]     (3)
Ub = [Ub,0, Ub,1, Ub,2, Ub,3, Ub,4, Ub,5, Ub,6, Ub,7]     (4)

ΔU = [Ua-Ub] = [ ΔU0, ΔU1, ΔU2, ΔU3, ΔU4, ΔU5, ΔU6, ΔU7] (5)
```

Der daraus resultierende Phasenver-satz $\varphi_d$ ergibt sich aus:

$$\varphi_d = \arctan \frac{\Delta \mathrm{Im}}{\Delta \mathrm{Re}} \qquad (6)$$

Mit Hilfe der trigonometrischen Formen kann der Imaginärteil ΔIm und der Realteil ΔRe bestimmt werden. Dazu wird beispielsweise sendeseitig die Modulation der Beleuchtungs- oder Lichtquelle, d.h. des Senders 2, um den Phasenschritt $\psi_k$ mit (t-$\psi_k$) gegenüber der Modulation des Photomischdetektors 12 verschoben, so ergeben sich nachfolgende trigonometrische Formen.

$$\begin{aligned}
X_0 &= \Delta U_0[\cos(0°) + j \cdot \sin(0°)] = \Delta U_0 \\
X_1 &= \Delta U_1[\cos(45°) + j \cdot \sin(45°)] = \frac{\sqrt{2}}{2}\Delta U_1 + j \cdot \frac{\sqrt{2}}{2}\Delta U_1 \\
X_2 &= \Delta U_2[\cos(90°) + j \cdot \sin(90°)] = j \cdot \Delta U_2 \\
X_3 &= \Delta U_3[\cos(135°) + j \cdot \sin(135°)] = -\frac{\sqrt{2}}{2}\Delta U_3 + j \cdot \frac{\sqrt{2}}{2}\Delta U_3 \qquad (7) \\
X_4 &= \Delta U_4[\cos(180°) + j \cdot \sin(180°)] = -\Delta U_4
\end{aligned}$$

$$X_5 = \Delta U_5[\cos(225°) + j \cdot \sin(225°)] = -\frac{\sqrt{2}}{2}\Delta U_5 + j \cdot \left(-\frac{\sqrt{2}}{2}\right)\Delta U_5$$

$$X_6 = \Delta U_6[\cos(270°) + j \cdot \sin(270°)] = -j \cdot \Delta U_6$$

$$X_7 = \Delta U_7[\cos(315°) + j \cdot \sin(315°)] = \frac{\sqrt{2}}{2}\Delta U_7 + j \cdot \left(-\frac{\sqrt{2}}{2}\right)\Delta U_7$$

Der Imaginärteil ΔIm und der Realteil ΔRe werden wie folgt bestimmt:

$$\Delta \mathrm{Im} = \sqrt{2}(\Delta U_1 + \Delta U_3 - \Delta U_5 - \Delta U_7) + 2(\Delta U_2 - \Delta U_6) \qquad (8)$$

$$\Delta \mathrm{Re} = \sqrt{2}(\Delta U_1 - \Delta U_3 - \Delta U_5 + \Delta U_7) + 2(\Delta U_0 - \Delta U_4) \qquad (9)$$

Setzt man nun den Imaginärteil ΔIm und den Realteil ΔRe in Gleichung (6) ein, so erhält man unter Berücksichtigung der sendeseitigen Phasenverschiebung mittels des jeweiligen Phasenschritts $\psi_k$ folgende Gleichung:

$$\varphi_d = \arctan\left[(-1) \cdot \frac{[\sqrt{2}(\Delta U_1 + \Delta U_3 - \Delta U_5 - \Delta U_7) + 2(\Delta U_2 - \Delta U_6)]}{[\sqrt{2}(\Delta U_1 - \Delta U_3 - \Delta U_5 + \Delta U_7) + 2(\Delta U_0 - \Delta U_4)]}\right] \qquad (10)$$

Findet im Gegensatz dazu eine Phasenverschiebung mit Phasenschritten $\Psi_k$ empfängerseitig für den Photomischdetektor 12 statt, erscheint in Gleichung (10) kein negatives Vorzeichen, d.h. das Vorzeichen ist von der Phasenverschiebungsrichtung abhängig.

Für die Berechnung des Pixel-Grauwertbildes sind nachfolgende Ausführungen nicht notwendig, werden aber der Vollständigkeit halber aufgeführt.

Der Entfernungswert R kann wie folgt berechnet werden:

$$R = \frac{\varphi_d \cdot c}{2 \cdot \omega} \qquad (11)$$

mit $\varphi_d$= ($\omega \cdot \tau$ und $\tau$ = 2R/c.

Zur Erläuterung des erfindungsgemäßen Verfahren zur Bestimmung des Pixel-Grauwertes $P_{Grau}$ anhand von Differenzwerten D, wird nachfolgend kurz das im Stand der Technik bekannte Verfahren erläutert. Hierbei erfolgt die Bestimmung des Pixel-Grauwerts $P_{Grauwerte}$ durch Summation der Spannungssignale Ua und Ub. Dabei unterscheidet sich die Vorrichtung 1 zur Bestimmung des Pixel-Grauwertbildes nach dem Stand der Technik lediglich in der Auswerteeinheit 16, die sende- und empfangsseitigen Komponenten sind gleich. Die Pixel-Grauwerte $P_{Grauwert}$, die aus einem Pixelelement 14 gewonnen werden, ergeben sich gemäß dem Stand der Technik aus der Addition der Spannungswerte Ua und Ub.

$$P_{Grauwert} = U_a + U_b \quad (12)$$

Wird im Stand der Technik beispielsweise ein 8-Phasenalgorithmus angewandt, werden zur Erhöhung der Genauigkeit des Pixel-Grauwertes $P_{Grauwerte}$ die Spannungen [Ua, 0, Ua, 1, Ua,2, Ua,3, Ua,4, Ua,5, Ua,6, Ua,7] und [Ub,0, Ub,1, Ub,2, Ub,3, Ub,4, Ub,5, Ub,6, Ub,7] summiert. Anschließend kann eine Mittelwertbildung ausgeführt werden. Der gemittelte Pixel-Grauwert $P_{Grauwerte}$ wird bestimmt gemäß:

$$\overline{\sum a} = \frac{U_{a,0}+U_{a,1}+U_{a,2}+U_{a,3}+U_{a,4}+U_{a,5}+U_{a,6}+U_{a,7}}{8}$$

$$\overline{\sum b} = \frac{U_{b,0}+U_{b,1}+U_{b,2}+U_{b,3}+U_{b,4}+U_{b,5}+U_{b,6}+U_{b,7}}{8} \quad (13)$$

$$\overline{P_{Grauwerte}} = \overline{\sum a} + \overline{\sum b}$$

Figur 3 zeigt beispielhaft in einer schematischen Darstellung das Verhalten des Pixel-Grauwertes $\overline{P_{Grauwerte}}$ für ein Pixel-Grauwertbild durch Summation in Abhängigkeit von einer Erhöhung des Störsignals SL, z.B. Störlichtes bzw. Hintergrundlichtes nach dem Stand der Technik. Zunächst wird der Verlauf des Pixel-Grauwerts $\overline{P_{Grauwcrte}}$ mit deaktivierter Störlicht-Unterdrückungsschaltung 28 betrachtet (siehe Kurve I, Volllinie). Erhöht man das Störsignal SL, Störlicht oder Gleichlicht, so erhöht sich auch der Pixel-Grauwert $\overline{P_{Grauwerte}}$, bis ein Sättigungsniveau erreicht wird. Aktiviert man die Störlicht-Unterdrückungsschaltung 28, so steigt der Pixel-Grauwert $\overline{P_{Grauwerte}}$ ebenfalls mit zunehmendem Störlicht SL, aber nur bis zur eingestellten Schwelle der Störlicht-Unterdrückungsschaltung 28 an (siehe Kurve II, gestrichelte Linie). Ab dieser Schwelle erreicht der Pixel-Grauwert $\overline{P_{Grawerte}}$ durch Summation ebenfalls ein Sättigungsniveau, wie durch Figur 3 verdeutlicht wird.

Figur 4 zeigt in einer schematischen Darstellung beispielhaft das Verhalten des Pixel-Grauwertes $\overline{P_{Grauwerte}}$ (Pixel-Grauwertbildes) durch Summation in Abhängigkeit von einer Erhöhung des Nutzsignals NL (= aktive Beleuchtung, optisches - Modulationssignal M1) nach dem Stand der Technik. Wird hierbei die Störlicht-Unterdrückungsschaltung 28 deaktiviert, so verhält sich der Pixel-Grauwert $P_{Grauwert}$ bei Erhöhung des Nutzsignals NL (siehe Kurve I, Volllinie) analog, wie bei der Störlichterhöhung gemäß Figur 3. Aktiviert man die Störlicht-Unterdrückungsschaltung 28, so steigt der Pixel-Grauwert $\overline{P_{Grauwrte}}$ durch Summation bis zur voreingestellten Schwelle der Störlicht-Unterdrückungsschaltung 28 an und nimmt später wieder ab (siehe Kurve II, gestrichelte Linie). Wird das Nutzsignal NL so stark erhöht, dass ein Videosignal das Resetpotential wieder erreicht bzw. übersteigen würde, so nimmt der Pixel-Grauwert $\overline{P_{Grauwerte}}$ nicht mehr ab, sondern nimmt einen stationären Zustand ein (siehe Figur 4). In Figur 4 ist zu erkennen, das der Pixel-Grauwert $\overline{P_{Grauwerte}}$ durch Summation mit aktivierter Störlicht-Unterdrückungsschaltung 28 Mehrdeutigkeiten aufweist, d.h. der Pixel-Grauwert $\overline{P_{Grauwerte}}$ wird verfälscht (siehe Kurve II).

Figuren 5a bis 5c zeigen anhand schematischer Darstellungen das Funktionsprinzip des Photomischdetektors 12 (auch Photonic Mixer Device oder kurz PMD genannt). Dabei zeigt die Figur 5a einen Querschnitt durch den als Silizium-Bauelement ausgeführten Photomischdetektor 12, insbesondere durch eines der Pixelelemente 14. Die Figuren 5b und 5c zeigen den Potentialverlauf der Photoladungen an den als Modulations-Gates ausgebildeten Empfangseinheiten 20a und 20b des Pixelelements 14 - Figur 5b bei Störlicht als Störsignal SL und Figur 5c bei Nutzlicht als Nutzsignal NL.

Aus Figur 5b geht hervor, dass die durch das Störsignal SL erzeugten Ladungsträger zu gleichen Teilen in den Potentialtöpfen der Modulations-Gates 20a und 20b verteilt sind. Über eine Ausleseelektronik - den Ausleseeinheiten 22a und 22b - werden die Spannungssignale $U_a$ und $U_b$ ausgelesen, die sich direkt proportional zu den aufgesammelten Ladungsträgern verhalten. Wird die Differenz der Spannungssignale $U_a$ und $U_b$ gebildet, so ist erkennbar, dass nur der modulierte Lichtanteil oder das optische Modulationssignal M1 (= Nutzsignal NL) berücksichtigt wird.

Um ein vom Hintergrundlicht oder Störlicht und von Störsignalen SL unabhängiges bzw. freies Pixel-Grauwertbild zu erhalten, wird mittels der Auswerteeinheit 16 die komplexe Zahl in Exponentialform bestimmt und dargestellt.

$$z = r \cdot e^{j\varphi_d}$$

Die Länge des Zeigers r heißt der Betrag |z| der komplexen Zahl z. Dieser ergibt sich zu

$$|z| = P_{Grau} = \sqrt{(\Delta \mathrm{Re})^2 + (\Delta \mathrm{Im})^2} \qquad (14)$$

und stellt gleichzeitig den von Störsignalen SL und Störlicht unabhängigen bzw. freien Pixel-Grauwert $P_{Grau}$ dar und ist gleichzeitig die Größe des empfangenen Nutzsignals NL.

Für eine andere Darstellung des Pixel-Grauwertes $P_{Grau}$, z.B. für den Fall eines schlechten Kontrastes im 2D-Bild, werden verschiedenste Korrekturmöglichkeiten ausgeführt. In einer bevorzugten Ausführungsform ist eine Logarithmierung des Pixel-Grauwertes $P_{Grau}$ vorgesehen. Alternativ oder zusätzlich können verschiedene Korrekturfaktoren K berücksichtigt werden, z.B. K=2. Eine mögliche Ausführungsform für die Bestimmung des von Störsignalen SL unabhängigen Pixel-Grauwerts $P_{Grau}$, welche sowohl die Logarithmierung als auch eine Korrektur berücksichtigt, erfolgt gemäß:

$$P_{Grau} = \log\left(\sqrt{(\Delta \mathrm{Re})^2 + (\Delta \mathrm{Im})^2}\right) \cdot K \qquad (15)$$

mit K = ein geeigneter Korrekturfaktor, der je nach System entsprechend an die Gegebenheiten angepasst ist.

Figur 6 zeigt das erfindungsgemäße Verhalten des von Störsignalen SL unabhängigen Pixel-$G_{rauwertes}$ $P_{Grau}$ in Abhängigkeit von einer Erhöhung der Störsignale SL.

Bei einem konstant empfangenen Nutzsignal NL (= optisches - Modulationssignal M1) am Photomischdetektor 12 stellt sich ein vom Störsignal SL unabhängiger Pixel-Grauwert $P_{Grau}$ ein. Erhöht sich beispielsweise das Hintergrundlicht oder Störlicht, verändert sich der vom Störlicht unabhängige Pixel-Grauwert $P_{Grau}$ erst, wenn das Sättigungsniveau der Videosignale erreicht wird (siehe Kurve I bei deaktivierter Störlicht-Unterdrückungsschaltung 28). Wird die Störlicht-Unterdrückungsschaltung 28 aktiviert, so verlängert sich der konstante Bereich (siehe Kurve II). Ist das Hintergrundlicht oder Störlicht zu groß, verringert sich der Pixel-Grauwert $P_{Grau.}$

Figur 7 zeigt das Verhalten des vom Störsignal SL unabhängigen Pixel-Grauwertes $P_{Grau}$ in Abhängigkeit von der Erhöhung des Nutzsignals NL (= optisches Modulationssignal M1).

Ist die Störlicht-Unterdrückungsschaltung 28 deaktiviert, so erhöht sich der vom Störsignal SL unabhängige Pixel-Grauwert $P_{Grau}$ bis zur Sättigungsgrenze der Videosignale. Danach nimmt der vom Störsignal SL, z.B. Hintergrundlicht unabhängige Pixel-Grauwert $P_{Grau}$ ab (= Kurve I). Bei aktivierter Störlicht-Unterdrückungsschaltung 28 ist dies nicht der Fall (= Kurve II). Der Pixel-Grauwert $P_{Grau}$ steigt solange an, bis ein Videosignal gleich bzw. größer dem Ausgangspotential (Resetpotential) ist. Der vom Störsignal SL unabhängige Pixel-Grauwert $P_{Grau}$ bleibt nun konstant.

Ein Vergleich des Funktionsverlaufs II des Pixel-Grauwerts $\overline{P_{Grauwerte}}$ nach dem Stand der Technik in der Figur 4 mit dem Funktionsverlaufs II des Pixel-Grauwerts $P_{Grau}$ gemäß der vorliegenden Erfindung in der Figur 7 zeigt, dass die Aufnahme des Grauwertbildes mittels eines erfindungsgemäß ausgebildeten Photomischdetektors 12 mit modifizierter Auswerteeinheit 16 eine höhere Signaldynamik erreicht als bei Ermittlung des herkömmlichen Pixel-Grauwertes $\overline{P_{Grauwerte}}$ durch Summation. Des Weiteren ist in Figur 4 erkennbar, das der Kurvenverlauf II des Pixel-Grauwertes $\overline{P_{Grauwerte}}$ Mehrdeutigkeiten aufweist. Darüber hinaus kann die erfindungsgemäße Pixel-Grauwertberechnung mittels Differenzbildung auch bei der sogenannten Pseudo-Rausch-Modulation (kurz PN-Modulation genannt) analog angewendet werden.

Die vorliegende Erfindung wurde anhand der vorstehenden Beschreibung so dargestellt, um das Prinzip der Erfindung und dessen praktische Anwendung bestmöglich zu erklären, jedoch lässt sich die Erfindung bei geeigneter Abwandlung selbstverständlich in mannigfaltigen anderen Ausführungsformen realisieren. Insbesondere ist eine Modulations-Gate-Struktur auf CMOS-Basis beschrieben, jedoch die Anwendung der Erfindung auch grundsätzlich für andere modulierbare photoempfindliche Strukturen wie bspw. Auf Basis von Photodioden (PIN) denkbar.

Bezugszeichenliste

| | |
|---|---|
| 1 | Vorrichtung zur Ermitt- lung eines Pixel- Grauwertbildes |
| 2 | Sender, z.B. Lichtquel- le, HF-Sender |
| 4 | Signalgenerator |
| 6 | Übertragungsweg |
| 8 | Verzögerung |
| 10 | Dämpfung |
| 12 | Empfangseinheit, z.B. Photomischdetektor oder Antenne |
| 14 | Pixelelement |
| 16 | Auswerteeinheit |
| 18 | Phasenschieber |
| 20a, | 20b Modulations-Gates |
| 22a, | 22b Ausleseeinheiten |
| 26 | Ausgangsleitung |
| 28 | Störlicht- Unterdrückungsschaltung |
| 30 | Maximalwertdetektor |
| 32 | Stromquellen |
| A | Ausgangssignal |
| D | Differenzsignal |
| G | Schwellwert |
| Ia, Ib | Stromsignale |
| K | Korrekturfaktor |
| k | Phasenmessung |
| L | Licht |
| M1 | erstes Modulations- signal, z.B. optisches Signal, Mikrowellen- signal |
| M2 | zweites Modulationssig- nal, z.B. elektrisches Signal |
| NL | Nutzsignal |
| $P_E$ | Pixel-Entfernungswert |
| $P_{Grau}$ | Pixel-Grauwert gemäß Erfindung |
| $P_{Grauwert}$ | Pixel-Grauwert nach Stand der Technik |
| R | Entfernungswert |
| S | elektrisches Signal |
| Sa | sendeseitig zugeführtes elektrisches Signal |
| Sb | empfangsseitig zuge- führtes elektrisches Signal |
| SL | Störsignal |
| Ua, Ub | Spannungssignale |
| $\Delta U$ | Spannungs- Differenzsignal |
| $\Psi_k$ | Phasenschritte |
| $\varphi_D$ | Phasenversatz |

## Patentansprüche

**1.** Verfahren zur Ermittlung eines Pixel-Grauwertbildes, insbesondere für ein mehrdimensionales Bildsystem, bei dem ein sendeseitig ausgesandtes und an einem aufzunehmenden Objekt reflektiertes erstes Modulationssignal (M1) mit einem zweiten Modulationssignal (M2) korreliert wird und empfangsseitig anhand von mindestens zwei jeweils zum empfangenen ersten Modulationssignal (M1) proportionalen Korrelationssignalen (Ua, Ub bzw. Ia, Ib) aufgenommen wird, wobei eines der Modulationssignale (M1, M2) sende- oder empfangsseitig in zumindest vier Phasenschritten ($\Psi_k$) phasenverschoben wird und für jeden Phasenschritt ($\psi_k$) anhand der Korrelationssignale (Ua, Ub bzw. Ia, Ib) ein Differenzsignal (D) und anhand dessen ein Pixel-Grauwert (Pgrau) unabhängig von Störsignalen (SL) bestimmt werden, wobei der pisel-grauwert ($P_{Grau}$) anhand der komplexen Funktion des Diffexanssiognals (D) gemäß $|z| = P_{Grau} = \sqrt{(\Delta\,\mathrm{Re})^2 + (\Delta\,\mathrm{Im})^2}$ ermittelt wird,

mit $P_{Grau}$=Pixel-Grauwert, ΔRe = Realteil des Differenzsignals, insbesondere eines Spannungs-Differenzsignals, ΔIm= Imaginärteil des Differenzsignals, insbesondere eines Spannungs-Differenzsignals;

**2.** Verfahren nach Anspruch 1, bei dem eines der Modulationssignale (M1, M2) sende- oder empfangsseitig in mehreren Phasenschritten ($\Psi_k$) um eine Phase von 45° oder 90° verschoben wird.

**3.** Verfahren nach einem der vorhergehenden Ansprüche, bei dem anhand des Differenzsignals (D) sowohl ein Pixel-Grauwert ($P_{Crau}$) als auch ein Pixel-Entfernungswert ($P_E$) bestimmt wird.

**4.** Verfahren nach einem der vorhergehenden Ansprüche, bei dem der Pixel-Grauwert ($P_{Grau}$) wellenlängenabhängig bestimmt wird.

**5.** Verfahren nach einem der vorhergehenden Ansprüche, bei dem der Pixel-Grauwert ($P_{Grau}$) logarithmiert wird.

**6.** Verfahren nach einem der vorhergehenden Ansprüche, bei dem der Pixel-Grauwert ($P_{Grau}$) anhand eines Korrekturfaktors (K) korrigiert wird.

**7.** Verfahren nach einem der vorhergehenden Ansprüche, bei dem als Differenzsignal (D) ein Spannungs-Differenzsignal (ΔU) oder ein Strom-Differenzsignal (ΔI) bestimmt wird.

**8.** Verfahren nach einem der vorhergehenden Ansprüche, bei dem der herkömmlichen Pixel-Grauwert ($P_{Grauwert}$) in Abhängigkeit von einem einzelnen der Korrelationssignale (Ua, Ub, Ia bzw. Ib) bestimmt wird.

**9.** Vorrichtung (1) zur Ermittlung eines Pixel-Grauwertbildes, insbesondere für ein mehrdimensionales Bildsystem, umfassend einen Sender (2) zur Aussendung eines ersten Modulationssignals (M1) und mindestens eine Empfangseinheit (12) zum Empfang des an einem aufzunehmenden Objekt reflektierten ersten Modulationssignal (M1) sowie einen Signalgenerator (4) und einen Phasenschieber (18) zur sendeseitigen oder empfangsseitigen Phasenmodulation mit einem zweiten Modulationssignal (M2) in Phasenschritten ($\Psi_k$) wobei der - Empfangseinheit (12) zur Erfassung von mindestens zwei jeweils zum empfangenen ersten Modulationssignal (M1) proportionalen Korrelationssignalen (Ua, Ub bzw. Ia, Ib) jeweils eine Ausleseeinheit (22a, 22b) zugeordnet ist, die mit einer Auswerteeinheit (16) verbunden sind zur Bestimmung eines aus den Korrelationssignalen (Ua, Ub bzw. Ia, Ib) gebildeten Differenzsignals (D) und zur Bestimmung eines vom Störsignalen (SL) unabhängigen, insbesondere störsignalfreien Pixel-Grauwerts ($P_{Grau}$) anhand des ermittelten Differenzsignals (D),

a) wobei für die Ausleseeinheiten (22a, 22b) eine Störlichtunterdrückungsschaltung (28) sowie zu jeder Ausleseeinheit(22a, 22b) eine identische steuerbare Stromquelle (32) vorgesehen ist,
b) der Störlichtunterdrückungsschaltung (28) die Spannungssignale (Ua, Ub) beider Ausleseeinheiten (22a, 22b) zugeführt werden sowie ein Schwellenwert (G) vorgegeben ist
c) und beide Stromquellen (32) mit einem Ausgangssignal (A) der Störlichtunterdrückungsschaltung (28) angesteuert werden, wenn eines der beiden Spannungssignale (Ua,Ub) den Schwellenwert(G) übersteigt und das Ausgangssignal (A) dann proportional zum größeren der beiden Spannungssignale (Ua,Ub) ist.

**10.** Vorrichtung nach Anspruch 9, bei der die Empfangseinheiten (12) als Antennen und der Sender (2) als ein HF-Sender ausgebildet sind.

## Claims

**1.** Method for determining a pixel gray scale value image, particularly for a multidimensional image system, in which a first modulation signal (M1) that is emitted at the emitting end and is reflected on an object that is to be recorded is correlated with a second modulation signal (M2) and is recorded at the receiving end based on at least two correlation signals (Ua, Ub or Ia, Ib) that are proportional to the respective received first modulation signal (M1), wherein one of said modulation signals (M1, M2) is phase-shifted in at least four phase steps ($\Psi_k$) at the emitting end or receiving end, and a difference signal (D) is determined for each phase step ($\Psi_k$) based on the correlation signals (Ua, Ub or Ia, Ib) and a pixel gray scale value ($P_{Grau}$) is determined based on said difference signal (D) independently of interfering signals (SL), wherein the pixel gray scale value ($P_{Grau}$) is determined based on the complex function of the difference signal (D) according to

$$|z| = P_{Grau} = \sqrt{(\Delta \mathrm{Re})^2 + (\Delta \mathrm{Im})^2},$$

with $P_{Grau}$ = pixel gray scale value, ΔRe = real component of the difference signal, particularly of a voltage difference signal, ΔIm = imaginary component of the difference signal, particularly of a voltage difference signal.

**2.** Method according to Claim 1, in which one of the modulation signals (M1, M2) is shifted in several phase steps ($\Psi_k$) by a phase of 45° or 90° at the emitting end or receiving end.

**3.** Method according to any one of the preceding claims, in which both a pixel gray scale value ($P_{Grau}$) and a pixel distance value ($P_E$) are determined based on the difference signal (D).

**4.** Method according to any one of the preceding claims, in which the pixel gray scale value ($P_{Grau}$) is determined dependently on the wavelength.

**5.** Method according to any one of the preceding claims, in which the pixel gray scale value ($P_{Grau}$) is logarithmized.

**6.** Method according to any one of the preceding claims, in which the pixel gray scale value ($P_{Grau}$) is corrected based on a correction factor (K).

**7.** Method according to any one of the preceding claims, in which a voltage difference signal (ΔU) or a current difference signal (ΔI) is determined as the difference signal (D).

**8.** Method according to any one of the preceding claims, in which the conventional pixel gray scale value ($P_{Grauwert}$) is determined dependently on an individual one of the correlation signals (Ua, Ub, Ia or Ib).

**9.** Device (1) for determining a pixel gray scale value image, particularly for a multidimensional image system, comprising an emitter (2) for emitting a first modulation signal (M1) and at least one receiving unit (12) for receiving the first modulation signal (M1) reflected on an object to be recorded, as well as a signal generator (4) and a phase shifter (18) for phase modulation with a second modulation signal (M2) in phase steps ($\Psi_k$) at the emitting end or receiving end, wherein, for picking up at least two correlation signals (Ua, Ub or Ia, Ib) that are proportional to the respective received first modulation signal (M1), one readout unit each (22a, 22b) is associated with the receiving unit (12), which readout units (22a, 22b) are connected to an evaluation unit (16), said connection being established for determining a difference signal (D) formed from the correlation signals (Ua, Ub or Ia, Ib) and for determining, based on the determined difference signal (D), a pixel gray scale value ($P_{Grau}$) that is independent of, in particular free from, interfering signals (SL),

a) wherein there are provided a stray light suppression circuit (28) for the readout units (22a, 22b) as well as an identical controllable current source (32) for each readout unit (22a, 22b) ;
b) the voltage signals (Ua, Ub) of both readout units (22a, 22b) are supplied to the stray light suppression circuit (28) as well as a threshold value (G) is preset for the stray light suppression circuit (28); and
c) both current sources (32) are triggered with an output signal (A) of the stray light suppression circuit (28) if one of the two voltage signals (Ua, Ub) exceeds the threshold value (G) and the output signal (A) is then proportional to the higher one of the two voltage signals (Ua, Ub).

**10.** Device according to Claim 9, in which the receiving units (12) are embodied as antennas and the emitter (2) is embodied as an HF-emitter.

## Revendications

**1.** Procédé de détermination d'une image en niveaux de gris-pixel, en particulier pour un système d'images pluridimensionnel, dans lequel un premier signal de modulation (M1) émis côté émission et réfléchi sur un objet à enregistrer est corrélé avec un deuxième signal de modulation (M2) et est enregistré, côté réception, à l'aide d'au moins deux signaux de corrélation (Ua, Ub ou Ia, Ib) respectivement proportionnels au premier signal de modulation (M1) reçu, un des signaux de modulation (M1, M2) étant déphasé, côté émission ou côté réception, en au moins quatre étapes

de phases ($\Psi_k$) et, pour chaque étape de phase ($\Psi_k$), à l'aide des signaux de corrélation (Ua, Ub ou Ia, Ib), un signal différentiel (D) et, à l'aide de celui-ci, un niveau de gris-pixel ($P_{Grau}$) étant déterminé indépendamment de signaux parasites (SL), le niveau de gris-pixel ($P_{Grau}$) étant déterminés à l'aide de la fonction complexe du signal différentiel (D) selon $\left|\sum\right| = P_{Grau} = \sqrt{(\Delta Re)^2 + (\Delta Im)^2}$ où ($P_{Grau}$) = niveau de gris-pixel, ΔRe = partie réelle du signal différentiel, en particulier d'un signal différentiel de tension, ΔIm = partie imaginaire du signal différentiel, en particulier d'un signal différentiel de tension.

**2.** Procédé selon la revendication 1, dans lequel un des signaux de modulation (M1, M2) est, côté émission ou réception, déphasé d'une phase de 45° ou de 90° en plusieurs étapes de phases ($\Psi_k$).

**3.** Procédé selon une des revendications précédentes, dans lequel, à l'aide d'un signal différentiel (D), un niveau de gris-pixel ($P_{Grau}$) ainsi qu'un niveau d'éloignement-pixel ($P_E$) sont définis.

**4.** Procédé selon une des revendications précédentes, dans lequel le niveau de gris-pixel ($P_{Grau}$) est défini en fonction de la longueur d'ondes.

**5.** Procédé selon une des revendications précédentes, dans lequel le niveau de gris-pixel ($P_{Grau}$) est logarithmisé.

**6.** Procédé selon une des revendications précédentes, dans lequel le niveau de gris-pixel ($P_{Grau}$) est corrigé à l'aide d'un facteur de correction (K).

**7.** Procédé selon une des revendications précédentes, dans lequel, en tant que signal différentiel (D), un signal différentiel de tension (ΔU) ou un signal différentiel d'intensité (ΔI) est défini.

**8.** Procédé selon une des revendications précédentes, dans lequel le niveau de gris-pixel ($P_{Grauwert}$) classique est défini en fonction d'un signal de corrélation individuel parmi les signaux de corrélation (Ua, Ub ou Ia, Ib)

**9.** Dispositif (1) pour déterminer une image de niveau de gis-pixel en particulier pour un système d'image pluridimensionnel, comprenant un émetteur (2) pour l'émission d'un premier signal de modulation (M1), et au moins une unité de réception (12) pour la réception du premier signal de modulation (M1) réfléchi sur un objet à enregistrer, ainsi qu'un générateur de signaux (4) et un déphaseur (18) pour la modulation de phase, côté émission ou côté réception, avec un deuxième signal de modulation (M2) en étapes de phases ($\Psi_k$), une unité de lecture (22a, 22b) étant respectivement affectée à l'unité de réception (12) pour la détection d'au moins deux signaux de corrélation (Ua, Ub ou Ia, Ib) respectivement proportionnels au premier signal de modulation (M1) reçu, unité de lecture qui est raccordée à une unité d'analyse (16) pour la définition d'un signal différentiel (D) formé à partir des signaux de corrélation (Ua, Ub ou Ia, Ib) et pour la définition, à l'aide du signal différentiel (D) déterminé, d'un niveau de gris - pixel indépendant de signaux parasites (SL), en particulier exempt de signaux parasites ;

a) un circuit d'élimination de lumière parasite (28) étant prévu pour les unités d'analyse (22a, 22b), et une source de courant (32) pouvant être commandée, identique, étant prévue pour chaque unité d'analyse (22a, 22b),
b) les signaux de tension (Ua, Ub) des deux unités d'analyse (22a, 22b) étant conduits au circuit d'élimination de lumière parasite (28), et une valeur de seuil (G) étant prédéfinie
c) et les deux sources de courant (32) étant pilotées par un signal de sortie (A) du circuit d'élimination de lumière parasite (28) quand un des deux signaux de tension (Ua, Ub) dépasse la valeur de seuil (G), et quand le signal de sortie (A) est alors proportionnel au plus grand des deux signaux de tension (Ua, Ub).

**10.** Dispositif selon la revendication 9, dans lequel les unités de réception (12) sont constituées sous forme d'antennes, et dans lequel l'émetteur (2) est constitué sous forme d'émetteur HF.

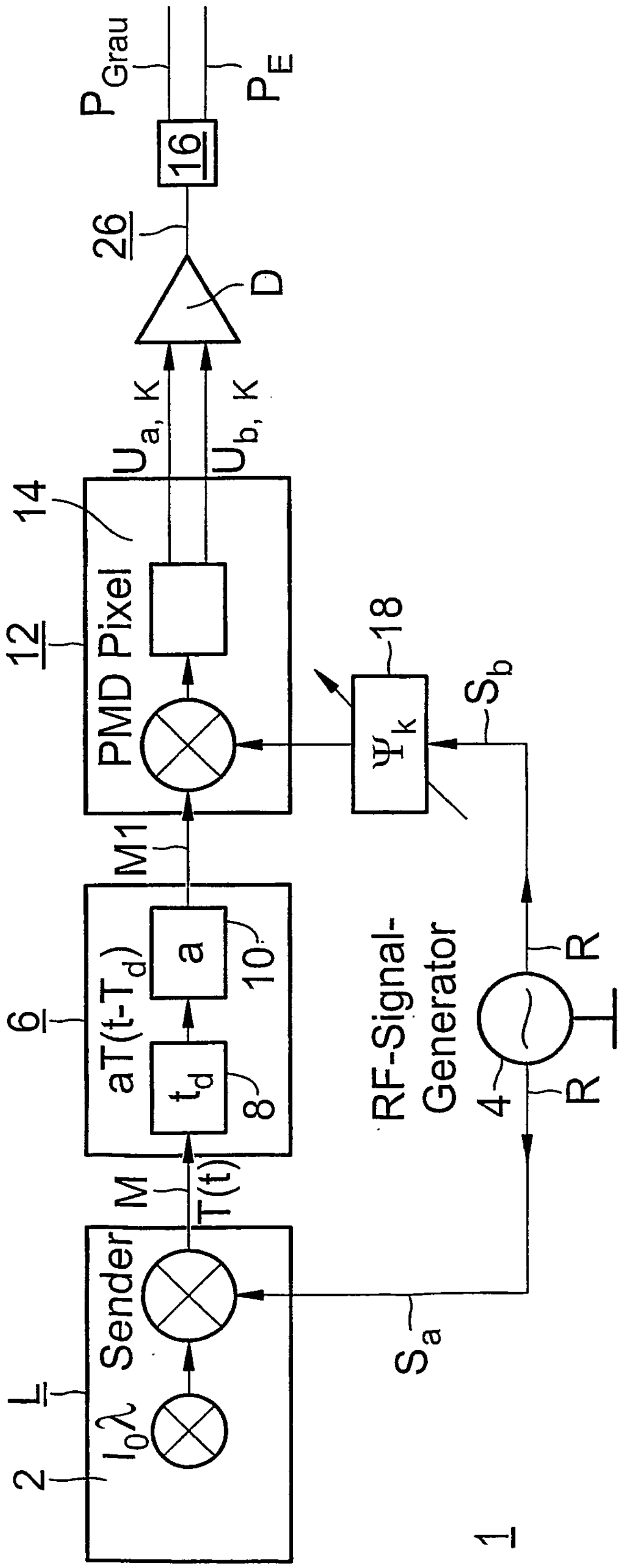
Sender
PMD Pixel
RF-Signal-Generator
aT(t-Td)
M
M1
T(t)
Sa
Sb
R
R
Ua, K
Ub, K
D
PGrau
PE
1
2
L
4
6
8
10
12
14
16
18
26

Fig. 1

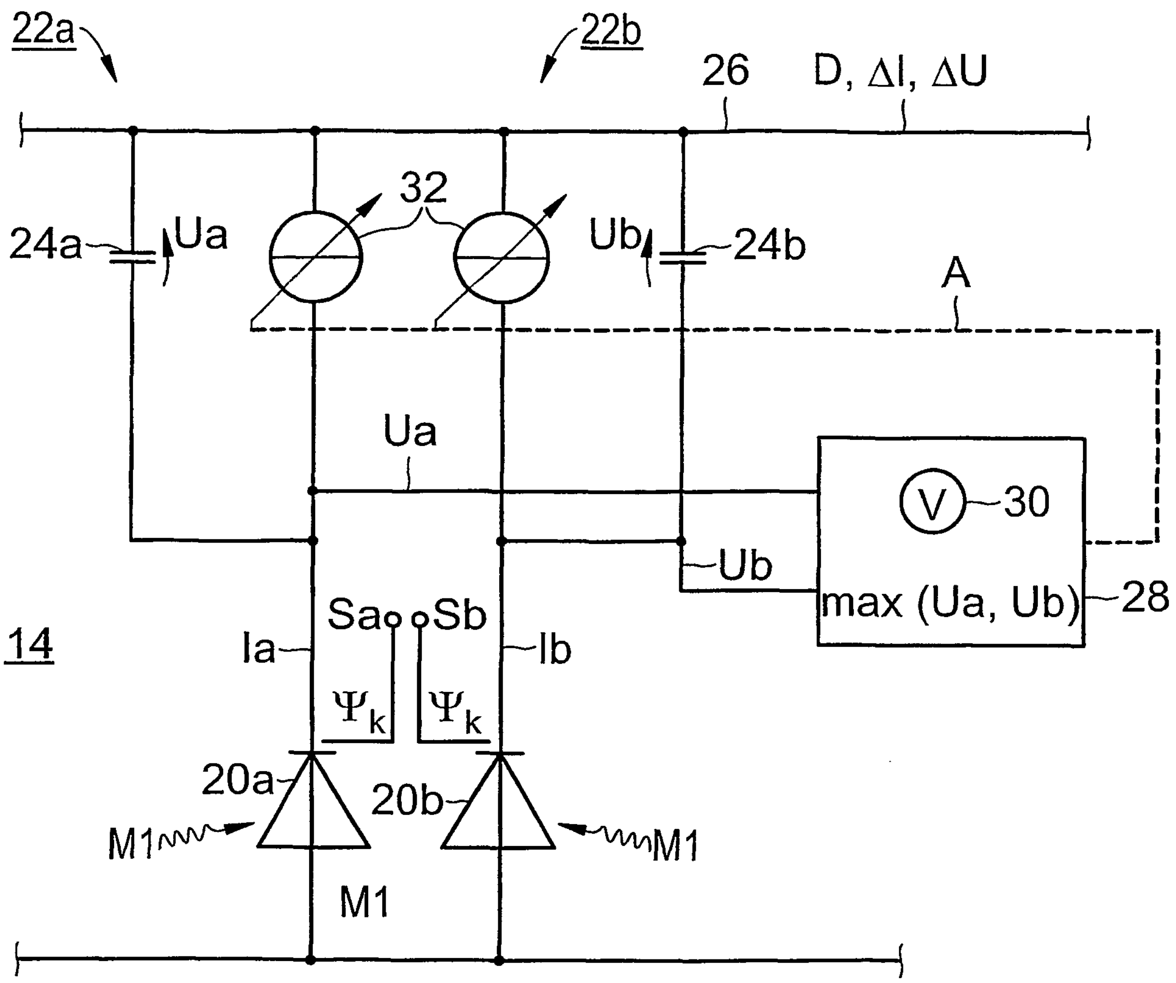
22a
22b
26
D, ΔI, ΔU
32
24a
Ua
Ub
24b
A
Ua
V
30
Ub
max (Ua, Ub)
28
14
Sa
Sb
Ia
Ib
Ψk
Ψk
20a
20b
M1
M1
M1

Fig. 2

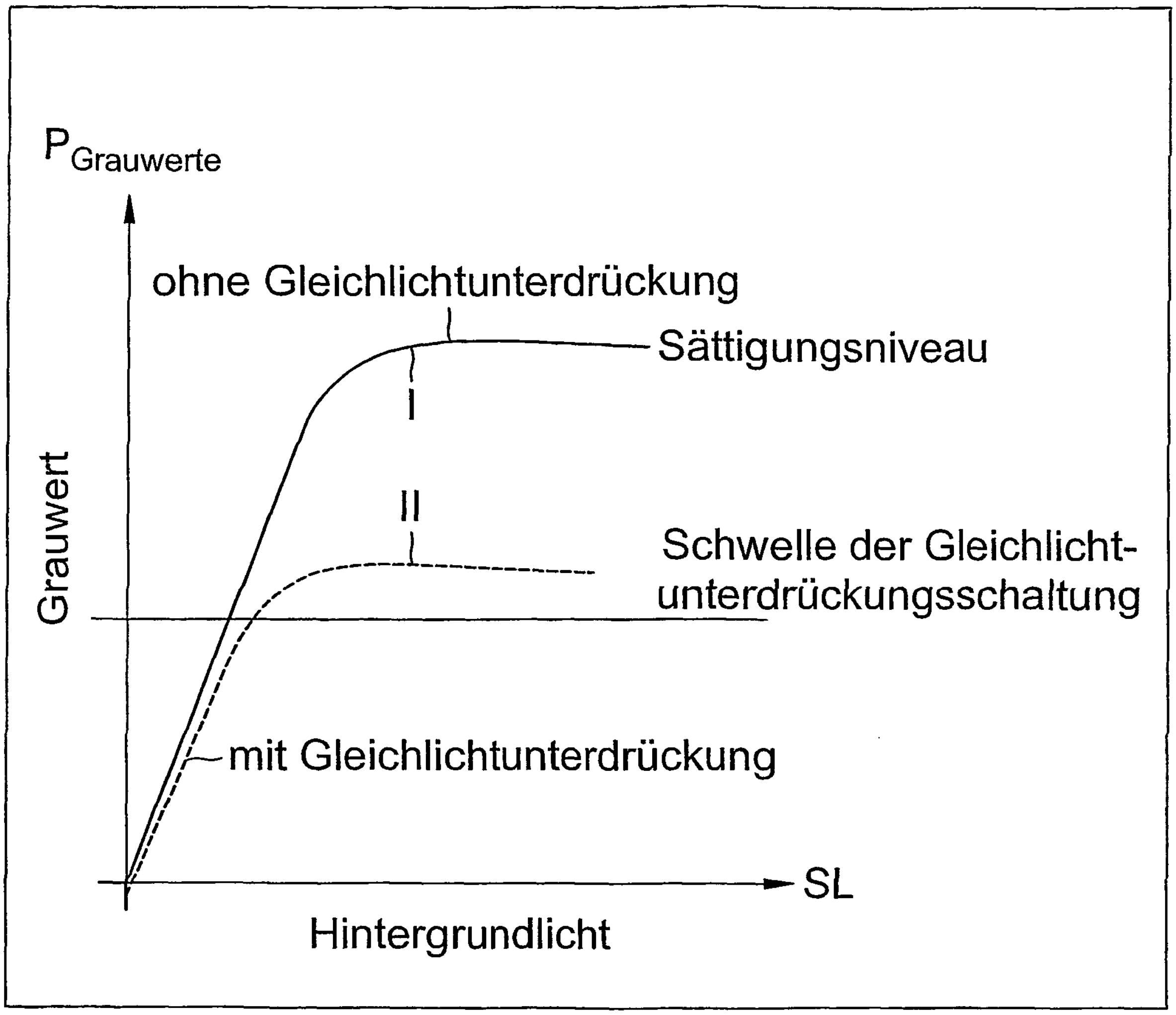


Stand der Technik

Fig. 3

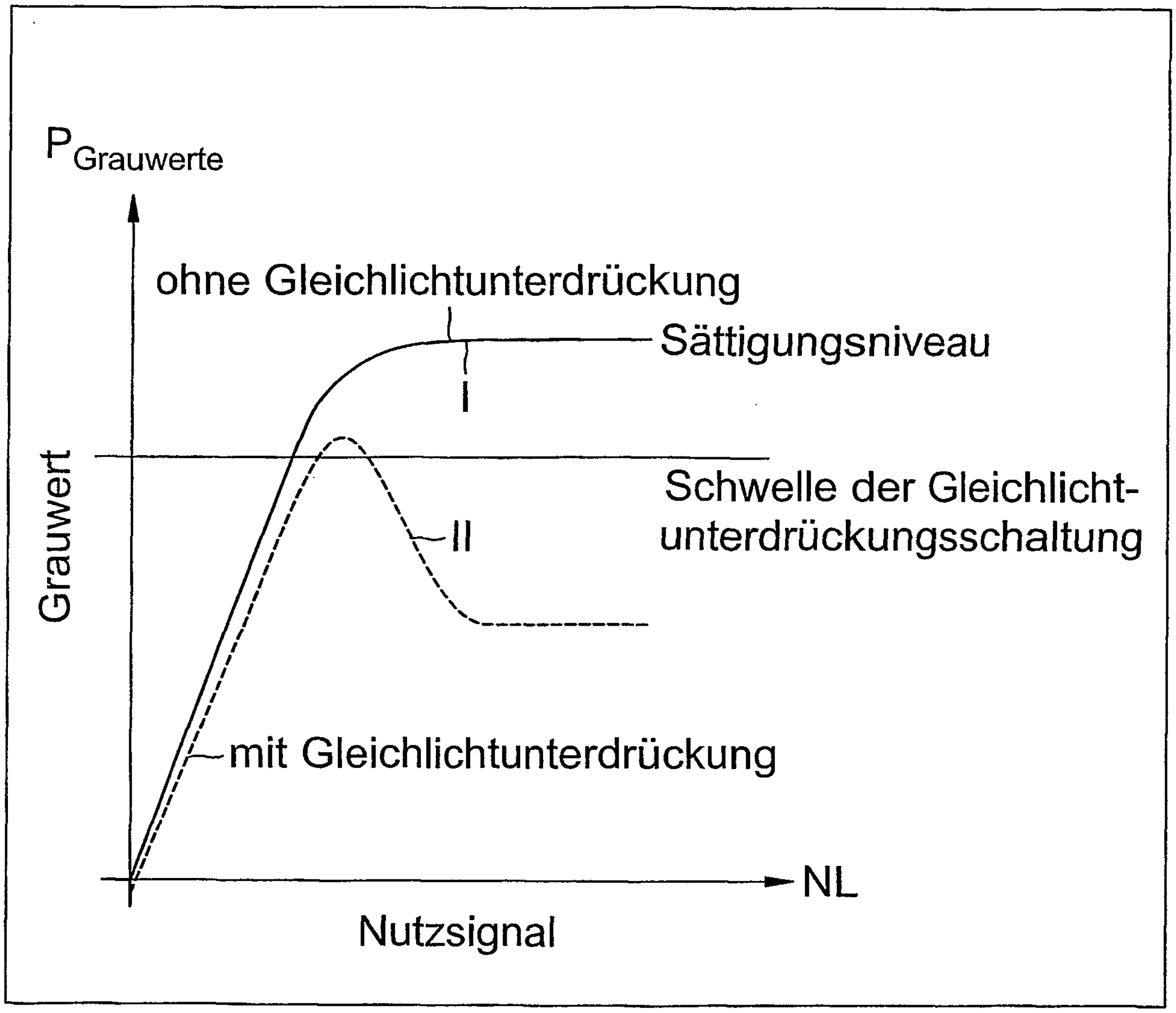


Stand der Technik

Fig. 4

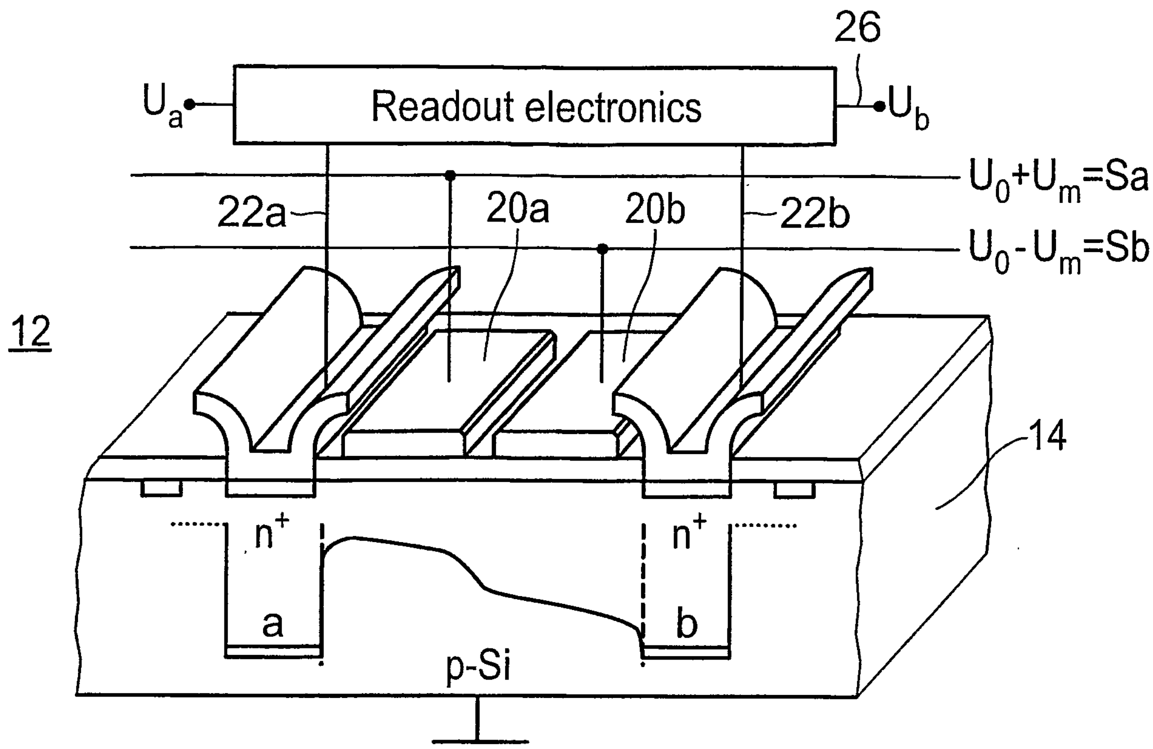


Fig. 5a

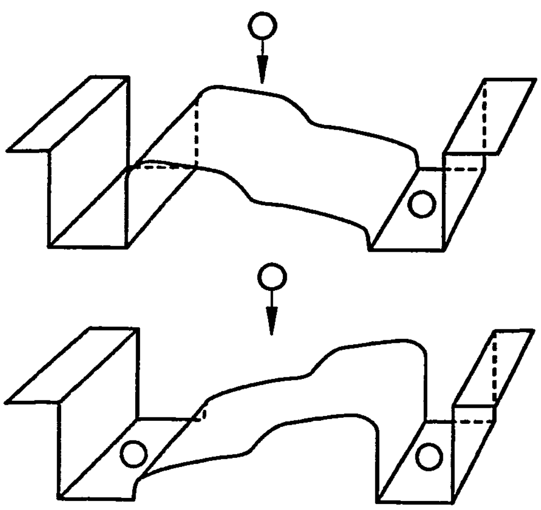

Fig. 5b

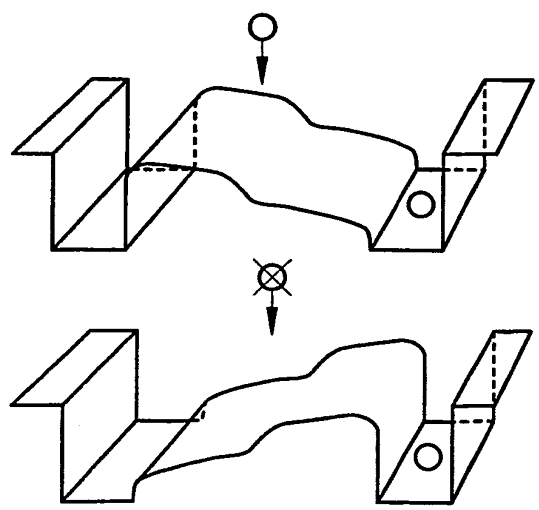

Fig. 5c

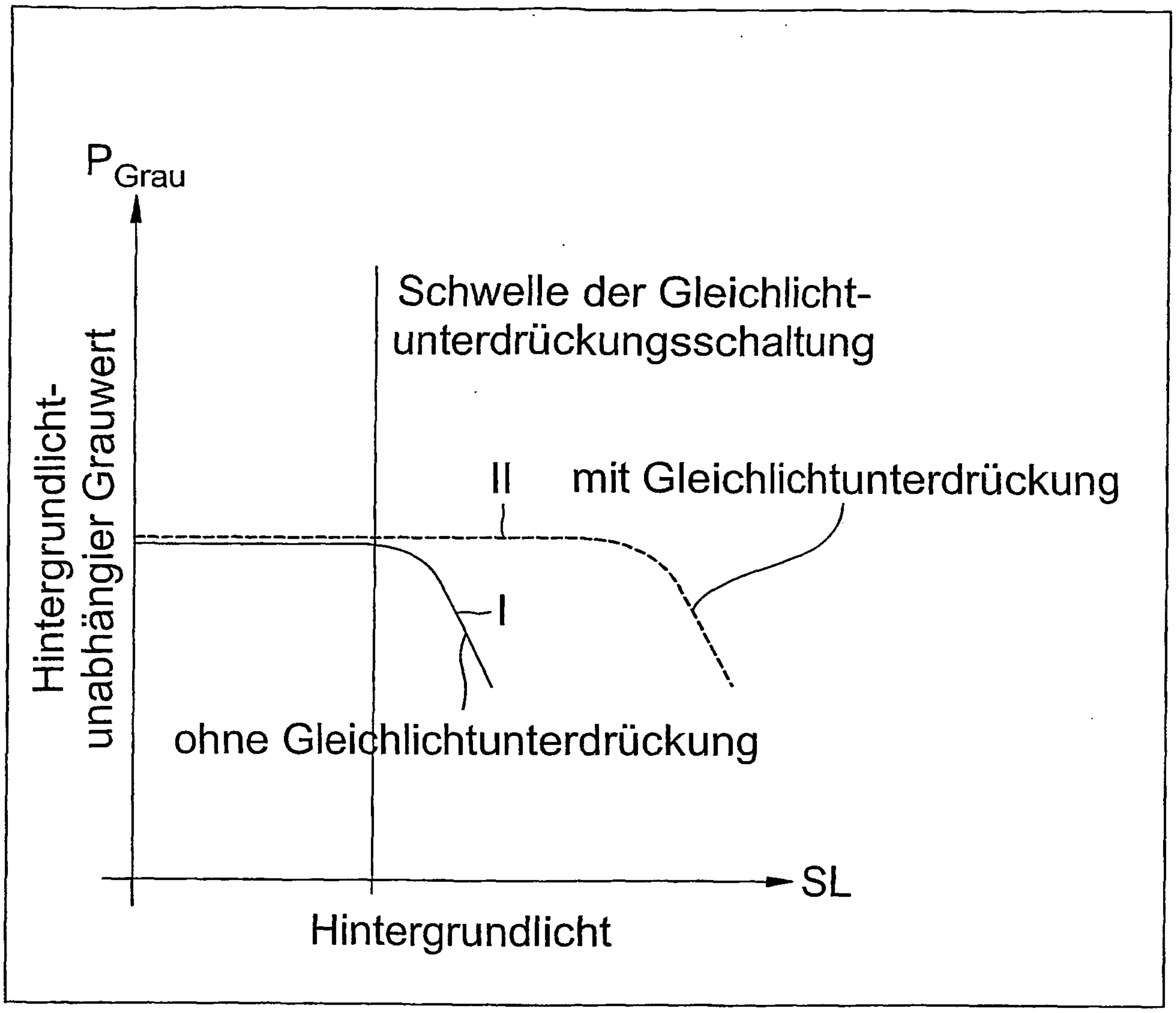

$P_{Grau}$
Hintergrundlicht-
unabhängier Grauwert
Schwelle der Gleichlicht-
unterdrückungsschaltung
II
mit Gleichlichtunterdrückung
I
ohne Gleichlichtunterdrückung
SL
Hintergrundlicht


Fig. 6

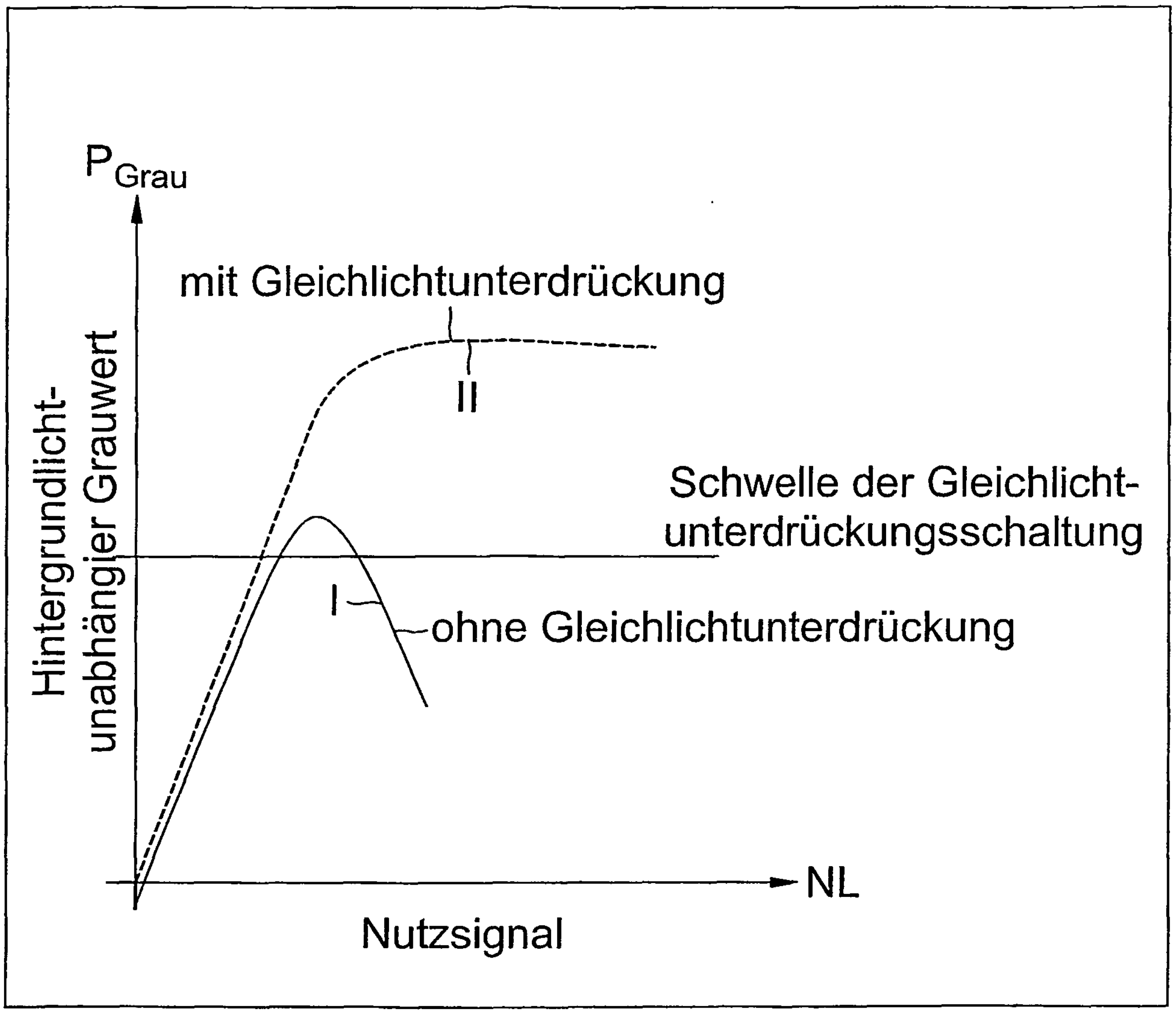
$P_{Grau}$
Hintergrundlicht-
unabhängier Grauwert
mit Gleichlichtunterdrückung
II
Schwelle der Gleichlicht-
unterdrückungsschaltung
I
ohne Gleichlichtunterdrückung
NL
Nutzsignal

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19821974 A1
- US 2002084430 A1